# EUROPÄISCHE PATENTSCHRIFT

(11) **EP 0 629 309 B1**
(45) Veröffentlichungstag und Bekanntmachung des Hinweises auf die Patenterteilung: **02.06.1999**
(21) Anmeldenummer: 93905150.4
(22) Anmeldetag: 02.03.1993
(51) Int. Cl.: G21C 9/004, F16K 17/38

(54) **SICHERHEITSEINRICHTUNG GEGEN ÜBERDRUCKVERSAGEN EINES KERNREAKTOR-DRUCKBEHÄLTERS**
SAFETY DEVICE AGAINST THE FAILURE OF A NUCLEAR REACTOR PRESSURE VESSEL DUE TO OVERPRESSURE
DISPOSITIF DE PREVENTION DE DEFAILLANCE DUE A LA MISE EN SURPRESSION DE LA CUVE SOUS PRESSION D'UN REACTEUR NUCLEAIRE

(30) Priorität: 03.03.1992 DE 4206658
(43) Veröffentlichungstag der Anmeldung: 21.12.1994
(73) Patentinhaber: SIEMENS AKTIENGESELLSCHAFT, 80333 München (DE)
(72) Erfinder: STOCKHAUSEN, Horst-Dieter, D-8500 Nürnberg 60 (DE); SEIDELBERGER, Hartmut, D-8520 Erlangen (DE); HAU, Gerhard, D-8510 Fürth (DE); HOLLMAN, Josef, D-8602 Schlüsselfeld (DE)
(86) Internationale Anmeldenummer: DE9300181
(87) Internationale Veröffentlichungsnummer: WO9318522

(56) Entgegenhaltungen:
- EP-A- 0 302 678
- AU-A- 18 171
- DE-A- 3 526 377
- US-A- 4 232 796
- US-A- 4 567 016

## Beschreibung

Die Erfindung bezieht sich auf eine Sicherheitseinrichtung gegen Überdruckversagen eines Kernreaktor-Druckbehälters bei ungenügender Kernkühlung.

In der australischen Patentschrift AU-A-18.171/67 ist eine Entlastungsvorrichtung für ein Druckgefäß beschrieben. Die Entlastungsvorrichtung weist einen schmelzbaren Pfropfen auf, der so angebracht ist, daß er einen aus dem Druckgefäß herausführenden Strömungskanal verstopft. Der Pfropfen ist so ausgelegt, daß er unterhalb einer kritischen Temperatur fest ist und bei der kritischen Temperatur zerreißt.

Wird bei einem Kernkraftwerk im allgemeinen und bei einem Druckwasserreaktor-Kernkraftwerk im besonderen das äußerst unwahrscheinliche Versagen sämtlicher Kühleinrichtungen des Reaktorkerns unterstellt, so besteht die Gefahr, daß der Reaktorkern überhitzt wird. Bei einem Druckwasser-Kernkraftwerk wird ein unzulässiger Überdruck im Primärkreis durch das Druckhaltesystem mit Sprüh- und Abblaseeinrichtungen vermieden. Ein Abblasebehälter dient dazu, den beim Öffnen der Druckhalter-, Abblase- und Sicherheitsventile und der Volumenregelsystem-Sicherheitsventile abgeblasenen Dampf zu kondensieren. Der Abblasebehälter ist zu etwa zwei Dritteln mit Wasser gefüllt, darüber befindet sich ein Stickstoff-Polster. Bei Druckwasserreaktoren herrscht im Primärkreis ein Druck von z.B. 158 bar.

Die Erfindung geht von der Überlegung aus, den Abblase-Ansprechdruck im Kühlkreis eines Kernreaktors, insbesondere im Primärkreis eines Druckwasserreaktors, temperaturabhängig wesentlich zu reduzieren, so daß im sehr unwahrscheinlichen Falle der Überhitzung des Reaktorkerns der Primärkreisdruck auf Werte unter 30 bar automatisch herabgesetzt wird. Folglich ist Aufgabe der Erfindung, eine Sicherheitseinrichtung zu schaffen, welche die Erfüllung dieses Kriteriums gestattet und damit eine Barriere gegen Überdruckversagen des Kernreaktor-Druckbehälters bei Kernüberhitzung bildet.

Erfindungsgemäß wird die gestellte Aufgabe bei einer Sicherheitseinrichtung der eingangs genannten Art durch die in Anspruch 1 angegebenen Merkmale gelöst.

Vorteilhafte Weiterbildungen sind in den Unteransprüchen angegeben. Die Grenztemperatur liegt vorzugsweise in einem Bereich von 600°C bis 700°C.

Gemäß einer bevorzugten Ausbildungsform ist das Druckrohr ein Abblaserohr und die Druckausgleichsöffnung eine Druckentlastungsöffnung. In diesem Falle dient die Sicherheitseinrichtung zum direkten Druckabbau, wobei das Druckrohr außerhalb des Druckbehälters als Abblaseleitung in einen Abblasebehälter mündet. Das Druckrohr kann zum Zwecke des indirekten Druckabbaus jedoch auch ein Drucksteuerrohr sein, mit dem ein zur Reduzierung des Systemdrucks behälter-extern vorgesehenes Abblaseventil ansteuerbar ist. Was den Meßort und die Montage des Druckrohres angeht, so besteht eine vorteilhafte Ausführungsform darin, daß das Druckrohr in hängender Anordnung durch einen Deckelstutzen des Druckbehälters dichtend hindurchgeführt ist und mit einem durch den Abschmelz-Dichtkörper abgedichteten Lochrohrkopf in das Innere des Druckbehälters ragt. Dieser Lochrohrkopf befindet sich dann z.B. in unmittelbarer Nähe der oberen Kerngitterplatte und würde bei einer Überhitzung des Kerns oder des oberen Kernbereiches die Temperaturerhöhung sehr schnell "fühlen".

Gemäß einer anderen vorteilhaften Ausführung, bei der eine Deckeldurchführung nicht erforderlich ist, ist das Druckrohr mit einem mittels des Abschmelz-Dichtkörpers abgedichteten Lochrohrkopf unterhalb des Reaktorkerns, insbesondere innerhalb eines unteren Kerngerüstes, positioniert und im Innenraum der Bodenkalotte abwärts und anschließend im Ringraum (zwischen Kernbehälter und Druckbehälterwand) aufwärts zu ein er im Wandbereich zwischen den Hauptkühlmittelstutzen gelegenen druckdichten Durchführung verlegt. Da sich das untere Kerngerüst in unmittelbarer Nähe des Reaktorkerns befindet und metallisch-leitend mit dem Kernbehälter verbunden ist, so kann der Lochrohrkopf auch an dieser Stelle Kernüberhitzungen zuverlässig und schnell "erfühlen".

Wird das Druckrohr als Abblaserohr ausgeführt, so ist es besonders vorteilhaft, wenn der Lochrohrkopf durch einen Rohrstopfen stirnseitig abgeschlossen ist und mehrere einander benachbarte Druckausgleichsöffnungen in seiner Rohrmantelwand aufweist, wobei die Druckausgleichsöffnungen durch eine auf die Rohrmantelwand aufgelötete Schmelzhülse abgedichtet sind. Dabei ist es zweckmäßig, aus Gründen der Redundanz und der Erzielung eines ausreichend großen Abblasequerschnitts mehrere rohr-axial benachbarte Kränze von Druckausgleichsöffnungen vorzusehen. Der Rohrstopfen weist insbesondere ein konisches Profil mit abgerundeter Spitze auf, damit die normale Kühlmittelströmung im Inneren des Druckbehälters möglichst wenig beeinflußt wird.

Wird als Druckrohr ein Drucksteuerrohr verwendet, wie bereits vorstehend ausgeführt wurde, dann kann der Durchlaßquerschnitt des Rohres wie auch seiner Druckausgleichsöffnungen kleiner gemacht werden als bei einem Abblaserohr. Bevorzugt ist ein als Drucksteuerrohr ausgebildetes Druckrohr an seinem in das Innere des Druckbehälters ragenden Ende insbesondere durch einen Deckel abgeschlossen und weist an seiner Mantelwand wenigstens eine Druckausgleichsbohrung auf, innerhalb welcher ein Metallkugelkörper in einen Abschmelz-Dichtkörper eingebettet ist. Dabei empfiehlt es sich, daß die Druckausgleichsbohrung eine Schrägbohrung ist, deren Bohrungsachse schräg nach innen orientiert ist, so daß im Aufschmelzfalle der Metallkugelkörper in den Innenraum des Drucksteuerrohres fällt. Als Schmelzlot für den Abschmelz-Dichtkörper hat sich eine Hartlot-Silberlegierung mit einem relativ hohen Silberanteil (von z.B. 50 %) als vorteilhaft erwiesen. Durch die Schmelzlotlegierung läßt sich der gewünschte Grenztemperaturbereich einstellen, der vorteilhafterweise bei z.B. 700° C liegen kann. Ein Silberlot hat den Vorteil, daß es unterhalb der Ansprechtemperatur temperatur- und strahlungsresistent ist.

Im folgenden wird der Erfindungsgegenstand anhand mehrerer in der Zeichnung dargestellter Ausführungsbeispiele noch näher erläutert. In der Zeichnung zeigt:
Figur 1 einen Längsschnitt durch einen Reaktordruckbehälter mit einem als Abblaserohr ausgeführten Druckrohr, dessen Lochrohrkopf im Bereich des unteren Kerngerüstes positioniert ist,
Figur 2 die Einzelheit II des Lochrohrkopfes aus Figur 1,
Figur 3 ein zweites Ausführungsbeispiel für ein als Abblaserohr ausgebildetes Druckrohr, welches in hängender Anordnung durch einen Deckelstutzen des Druckbehälters dichtend hindurchgeführt ist,
Figur 4 die Einzelheit IV aus Figur 3, vergrößert im Detail,
Figur 5 ein drittes Ausführungsbeispiel in einem Teilschnitt durch den oberen Bereich eines Reaktordruckbehälters mit einem als Drucksteuerrohr ausgebildeten Druckrohr und einem durch ein Schmelzlot abgedichteten Lochrohrkopf an seinem unteren Ende sowie mit Deckeldurchführung am oberen Ende des Druckrohrs, einer angeschlossenen Steuerleitung und einem schematisch angedeuteten Abblaseventil, und
Figur 6 die Einzelheit V aus Figur 4 vergrößert im Detail.

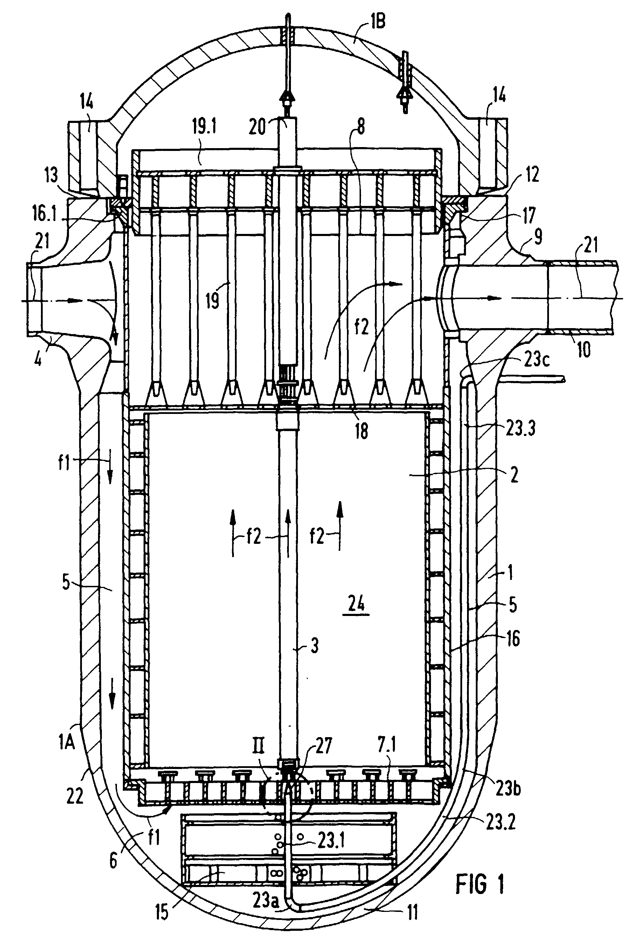

Der vereinfacht im Schnitt in Figur 1 dargestellte Kernreaktor-Druckbehälter 1 (im folgenden: Druckbehälter) eines Druckwasser-Kernkraftwerks ist z.B. für eine thermische Reaktorleistung von 3765 MW, entsprechend einer elektrischen Bruttoleistung von 1300 MW, ausgelegt. Der Reaktorkern 2, welcher aus Brennelementen zusammengesetzt ist, von welchen nur ein einzelnes 3 dargestellt ist, wird mit Leichtwasser gekühlt, das über Einlaßstutzen 4 eintritt und in einem Ringraum 5 abwärts strömt (vgl. Strömungspfeile f1). Vom unteren Plenum 6 strömt das Kühlwasser durch den perforierten unteren Rost 7 aufwärts durch die Kühlkanäle der Brennelemente 3 (vgl. Strömungspfeile f2), wärmt sich darin auf und fließt dann vom oberen Plenum 8 durch Auslaßstutzen 9 und die daran angeschlossene (ausschnittsweise dargestellte) sogenannte heiße Primärkreisleitung 10 zu einem nicht dargestellten Dampferzeuger, wo es seine Wärme über wärmetauschende Rohre an das Sekundärkühlmittel abgibt. Die Kühlwasserströmung durch den Reaktorkern 2, das obere Plenum 8 und die Austrittsstutzen 9 ist durch die schon erwähnten Strömungspfeile f2 verdeutlicht. Vom Dampferzeuger wird das gekühlte Kühlwasser, auch als Primärkühlmittel bezeichnet, über die sogenannte kalte Primärkreisleitung (nicht dargestellt) zum Eintrittsstutzen 4 des Druckbehälters 1 wieder zurückgepumpt, so daß sich im Normalbetrieb ein kontinuierlicher Kreislauf einstellt. Im Normalbetrieb steht das Primärkühlmittel im Primärkreis und damit auch innerhalb des Druckbehälters 1 unter einem Druck von ca. 158 bar, die Kühlmitteltemperatur am Austrittsstutzen 9 beträgt etwa 329° C. Der Reaktordruckbehälter 1 mit seinen Einbauten ist für diese Druck- und Temperaturbeanspruchung zuzüglich eines Sicherheitszuschlages ausgelegt. Er besteht aus einem topfförmigen Behälterunterteil 1A mit Bodenkalotte 11 und Ringflansch 12 an seinem oberen Ende, mit welchem der einen Gegenflansch 13 aufweisende gewölbte Deckel 1B dichtend verschraubt ist (die Deckelschrauben sind nicht dargestellt, lediglich Schraubendurchgangsöffnungen 14). Von den Einbauten seien nur die wichtigsten erwähnt: eine untere Siebtonne 15, darüber mit geringem Abstand befindlich der schon genannte untere Rost 7, welcher den Boden eines Kernbehälters 16 bildet. Letzter ist mit einem Tragflansch 16.1 an einer Ringschulter 17 des Ringflansches 12 eingehängt und nimmt in seinem unteren Teil den Kern 2 mit den einzelnen Brennelementen 3 auf. Der Kern 2 ist durch eine obere Gitterplatte 18 abgedeckt, auf welcher sich ein Führungsgerüst 19 abstützt, dieses weist eine obere Tragplatte 19.1 auf. In einen Teil der Brennelemente tauchen Steuerstäbe 20 ein, und die von nicht näher dargestellten, oberhalb des Deckels 1B angeordneten Steuerstabantrieben zur Reaktivitätssteuerung abgesenkt oder angehoben werden können. Bei einer Vier-Loop-Anlage befinden sich über den Umfang des Druckbehälters 1 verteilt in der Ebene 21-21 abwechselnd vier Auslaßstutzen 9 und vier Einlaßstutzen 4. Das unter einem überkritischen Druck gehaltene und deshalb flüssige Kühlmittel bedeckt im Normalbetrieb nicht nur den Kern 2, sondern füllt auch das obere Plenum 8 etwa bis zur oberen Tragplatte 19.1 aus. Es ist deshalb eine wirksame Kühlung auch derjenigen Einbauten gewährleistet, die zwar selbst keine Wärme erzeugen (wie die Brennelemente 3), sondern durch Gamma-Strahlung einer sogenannten Gamma-Aufheizung unterliegen. Fällt der Wasserstand im Druckbehälter aufgrund eines sehr unwahrscheinlichen Ausfalls aller Kühl- und Notkühleinrichtungen, so beginnt die Bauteiltemperatur (normalerweise ca. 400° C) zu steigen, und Wärme wird insbesondere durch Strahlung und Leitung verstärkt an den Druckbehälter 1 abgegeben, insbesondere dann, wenn der Wasserstand bis zur oberen Gitterplatte 18 oder noch etwas darunter abgefallen ist. Diese Überhitzung wird in dem noch relativ frühen Stadium von der Sicher heitseinrichtung nach der Erfindung ausgenutzt, ein Überdruckversagen des Druckbehälters 1 bei der erwähnten ungenügenden Kernkühlung mit Sicherheit zu verhindern.

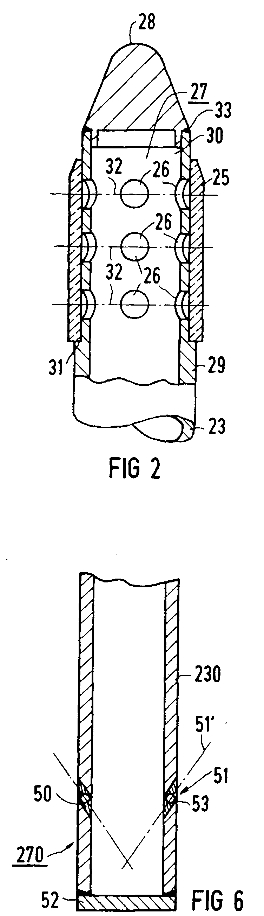

Hierzu ist ein in das Innere des Druckbehälters 1 ragendes und durch dessen Wand 22 druckdicht hindurchgeführtes Druckrohr 23 vorgesehen, welches wenigstens eine im als Ganzes mit 24 bezeichneten Druckbehälter-Innenraum angeordnete und durch einen Abschmelz-Dichtkörper 25 abgedichtete Druckausgleichsöffnung 26 aufweist (vgl. Figur 1 in Verbindung mit Figur 2). Das Druckrohr 23 ist ein Abblaserohr und die Druckausgleichsöffnung 26, dargestellt ist in Figur 2 ein Lochrohrkopf 27 mit mehreren Druckausgleichsöffnungen 26, eine Druckentlastungsöffnung.

Gemäß Figuren 1 und 2 ist das Druckrohr 23 mit einem mittels des Abschmelz-Dichtkörpers 25 abgedichteten Lochrohrkopf 27 unterhalb des Reaktorkerns 2 positioniert, vorzugsweise innerhalb des unteren Kerngerüstes oder Rostes 7, und zwar unmittelbar unterhalb einer Gitterplatte 7.1, auf welcher die Brennelemente 3 mit ihren unteren Enden oder Fußplatten aufgelagert sind. Der Lochrohrkopf 27 mit seinem Abschmelz-Dichtkörper 25 bildet so einen Wärmefühler, der auf eine Kernüberhitzung sehr schnell reagieren kann. Der Abschmelz- Dichtkörper 25 besteht hierzu aus einem Schmelzlot, welches bei einer Grenztemperatur im Bereich von z.B. 600 bis 700° C aufschmilzt und die Druckausgleichsöffnungen 26 freigibt, während des Normalbetriebs dagegen die Druckausgleichsöffnungen 26 verschlossen hält. Als Schmelzlot ist ein Hartlot auf der Basis einer Silberlegierung mit einem hohen Silberanteil von z.B. 50 % besonders gut geeignet, weil ein solches Hartlot bis oder bis nahe zu seiner Ansprechtemperatur keine Ermüdungserscheinungen zeigt und den druckdifferenz-bedingten Kräften standhält. Außerdem ist ein solches Lot strahlungsresistent. Das Druckrohr 23 ist mit einem ersten Rohrabschnitt 23.1 vom Lochrohrkopf 27 durch den unteren Rost 7 und die benachbarte Siebtonne 15 vertikal nach unten geführt, also im Innenraum der Bodenkalotte 11. Es ist dann bogenförmig mit Abstand zum Innenumfang als zweiter Rohrabschnitt 23.2 verlegt, bis zum Ringraum 5 zwischen Außenumfang des Kernbehälters 16 und Innenumfang des Druckbehälter-Unterteils 1A, wo es ab einer zweiten Abbiegestelle 23b (die erste Biegestelle ist mit 23a bezeichnet) als gerades Rohrleitungsstück 23.3 vertikal aufwärts verlegt ist bis zu einer dritten Abbiegestelle 23c. Hier ändert sich die Richtung des Druckrohres 23 von achsparallel-vertikal in achsnormal-horizontal, und das Druckrohr wird durch eine druckdichte, nicht näher dargestellte Durchführung nach außen verlegt (siehe das dargestellte äußere Rohrstück 23.4, welches zu einem in Figur 1 nicht dargestellten Abblasebehälter führt).

Der Lochrohrkopf 27 (Figur 2) ist durch einen Rohrstopfen 28 stirnseitig abgeschlossen. Der Lochrohrkopf 27 ist bevorzugt mit mehreren einander benachbarten Druckausgleichsöffnungen 26 in seiner Rohrmantelwand 29 versehen. Diese Mehrzahl der Druckausgleichsöffnungen 26 ist durch die schon erwähnte, auf die Rohrmantelwand 29 aufgelötete Schmelzhülse 25 abgedichtet. Die Schmelzhülse 25 sitzt paßgerecht auf einem verjüngten Ende 30 des Druckrohres 23 und ist axial durch Anlage an der durch die Verjüngung gebildeten Schulter 31 abgesichert. Es sind mehrere rohr-axial einander benachbarte Kränze 32 von Druckausgleichsöffnung 26 vorgesehen, im vorliegenden Falle drei. Jeder Kranz 32 umfaßt vier über den Umfang des Druckrohres 23 verteilte Druckausgleichsöffnungen 26. Der Rohrstopfen 28 weist, wie dargestellt, ein konisches Profil mit abgerundeter Spitze auf, er ist in das Ende des Druckrohres 23 eingesetzt und durch eine Ringschweißnaht 33 fixiert.

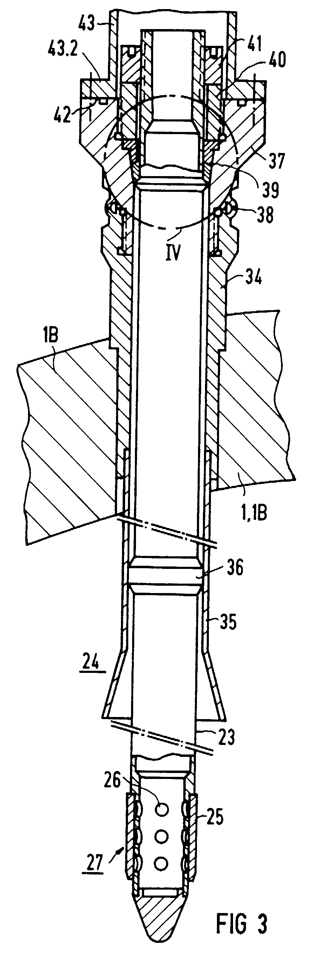

Das Druckrohr 23 nach Figuren 1 und 2 (und auch nach der noch zu erläuternden Figur 3) ist ein Abblaserohr, so daß die Öffnungen 26 Abblaseöffnungen sind; das Druckrohr 23 führt außerhalb des Druckbehälters 1 zu einem Abblaseventil (nicht dargestellt), welches den Abblasedampf in einen Abblasebehälter entlädt oder einspeist. Die Öffnung dieses Abblaseventils kann vorzugsweise druckgesteuert erfolgt derart, daß es öffnet, wenn ein von dem ankommenden Druckrohr 23 abgenommener Steuerdruck einen Mindestwert, z.B. 30 bar, erreicht. Im Normalbetrieb ist das Innere des Druckrohres 23 drucklos bzw. herrscht darin normaler Atmosphärendruck.

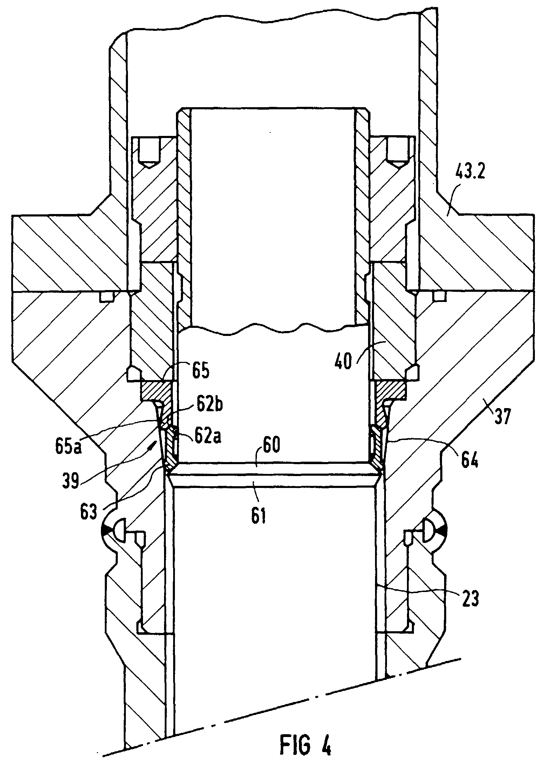

Im zweiten Ausführungsbeispiel nach Figuren 3 und 4 ist das Druckrohr 23 in hängender Anordnung durch einen Deckelstutzen 34 des Druckbehälters 1 dichtend hindurchgeführt und ragt mit einem durch den Abschmelz-Dichtkörper bzw. die Schmelzhülse 25 abgedichteten Lochrohrkopf 27 in das Innere 24 des Druckbehälters 1 (vgl. Figur 1). Der Deckelstutzen 34 ist durch ein an seinem Ende konisch erweitertes Schutzrohr 35 nach unten verlängert, das Lochrohr 23 ist auf seiner Länge mit Führungsringen 36 versehen, mittels welchen es axial wärmebeweglich gleitend am Innenumfang der Schutzrohres 35 bzw. des Deckelstutzens 34 geführt ist. Am äußeren Ende des Deckelstutzens 34 ist eine druckdichte Durchführung für das Druckrohr 23 vorgesehen, in dem ein Durchführungsgehäuse 37 mit seinem unteren Ende mit dem oberen Ende des Deckelstutzens 34 verschraubt und druckdicht verschweißt ist (Ringschweißnaht 38). Das Durchführungsgehäuse 37 bildet eine Aufnahme für eine konische Ringdichtung 39 und eine die Ringdichtung 39 in ihren Dichtsitz pressende Mutter 40 mit Kontermutter 41. Gegen ein mit einer kegeligen, umlaufenden Sitzfläche 60 versehenen Bund 61 des Druckrohres 23 ist ein erster Dichtring 62 mit seinem unteren balligen Ende 63 gehalten; letzteres wird auch gegen eine konische Fläche 64 am Innenumfang des Durchführungsgehäuses 37 gepreßt. Das obere Ende des ersten Dichtringes 62 ist kegelig/ballig geformt. Der ballige Teil 62a wird gegen das Druckrohr 23 gepreßt; gegen die umlaufende Kegelfläche 62b des ersten Dichtringes 62 wird der zweite Dichtring 65 mit einem nach unten vorspringenden ballig-konischen Ende 65a gepreßt, wobei der ballige Teil gegen die konische Innenumfangsfläche 64 des Durchführungsgehäuses 37 gehalten ist. Es ergeben sich mithin am Außenumfang des Druckrohres 23 und am Innenumfang (Innenumfangsfläche 64) des Durchführungsgehäuses 37 zwei umlaufende Dichtsitze 63/ 60, 63/64 bzw. 62/23, 65/64 der beiden Dichtringe 63/65 in bezug auf das Druckrohr 23 bzw. das Durchführungsgehäuse 37 und ferner ein umlaufender Dichtsitz 62b/65a zwischen dem ersten und dem zweiten Dichtring 62 bzw. 65.

An einen Ringflansch 42 des Durchführungsgehäuses 39 ist die Abblaseleitung 43 mit einem Ringflansch 43.2 druckdicht angeflanscht. Der Lochrohrkopf 27 im Beispiel nach Figur 3 ist so ausgebildet wie derjenige nach Figur 2. Der Vorteil der Sicherheitseinrichtung nach Figuren 1 und 2 im Vergleich zu derjenigen nach Figur 3 ist, daß bei einem Brennelementwechsel und einem Abschrauben des Behälterdeckels 1B das Druckrohr 23 nicht entfernt zu werden braucht, was beim Beispiel nach Figur 3 der Fall ist. Bei diesem Beispiel ist vorteilhaft, daß das Druckrohr 23 bis zur oberen Gitterplatte bzw. bis nahe an diese Gitterplatte herangeführt werden kann, so daß eine Kernüberhitzung in einem frühen Stadium sehr schnell erkannt werden kann.

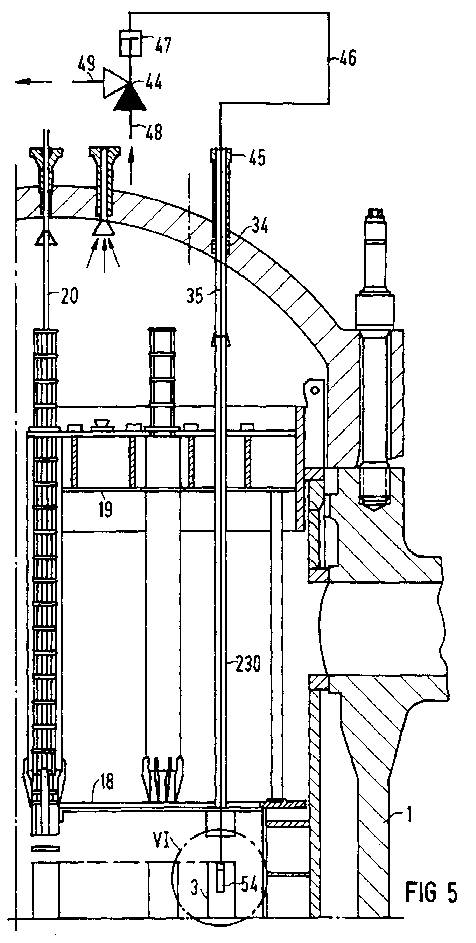

Im dritten Ausführungsbeispiel nach Figuren 4 und 5 ist das Druckrohr 230 ein Drucksteuerrohr, mittels welchem ein zur Reduzierung des Systemdrucks ein behälter-extern vorgesehenes Ventil 44 ansteuerbar ist. Hierzu ist das Druckrohr 230 durch einen Deckelstutzen 34 druckdicht hindurchgeführt (vgl. hierzu Figur 3). Im Bereich des druckdichten Anschlusses 45 einer Drucksteuerleitung 46 ist analog zu Figur 3 eine druckdichte Verschraubung und Verschweißung vorgesehen. Die Drucksteuerleitung 46 ist an einen Steuerkolben 47 des Abblaseventils 44 angeschlossen, welches z.B. als ein Drei- Wege-Ventil ausgebildet ist, und der über Leitung 48 am Abblaseventil 44 anstehende Systemdruck wird durch das Abblaseventil 44 zum (nicht dargestellten) Abblasebehälter über Leitung 49 umgeschaltet, wenn das Abblaseventil durch einen am Steuerkolben 47 anstehenden Steuerdruck in seine Auf- Stellung verlagert wird.

Das Drucksteuerrohr 230 kann im Vergleich zum Druckrohr 23 (Figuren 1 bis 3) in seinem Durchmesser kleiner sein; auch dieses Drucksteuerrohr hat einen "Wärmefühler" in Gestalt eines Abschmelz-Dichtkörpers 50, bestehend aus einem Schmelzlot, welches bei einer Grenztemperatur im Bereich von z.B. 600 bis 700° C aufschmilzt und die Drucksteuerleitung 230 freigibt, während des Normalbetriebs dagegen die Druckausgleichsöffnung 51 verschlossen hält. Insbesondere ist das Drucksteuerrohr 230 (Figur 6) an seinem in das Innere des Druckbehälters 1 (Figur 4) ragenden Ende durch einen Deckel 52 abgeschlossen und weist in seiner Mantelwand wenigstens eine Druckausgleichsbohrung 51 auf, innerhalb welcher ein Metallkugelkörper 53 in einen Abschmelzdichtkörper 50 eingebettet ist. Besonders günstig ist es, wenn die Druckausgleichsbohrung 51 eine Schrägbohrung, wie dargestellt, ist, deren Bohrungsachse 51' schräg nach innen orientiert ist, so daß im Aufschmelzfalle der Kugelkörper 53 in den Innenraum des Drucksteuerrohres 230 fällt. Dargestellt ist eine beidseitige Einbettung des Kugelkörpers 53, d.h. das Schmelzlot 50 verschließt die Druckausgleichsbohrung 51 sowohl außerhalb des Kugelkörpers 53 als auch innerhalb desselben.

In Figur 5 (gleiche Teile zu Figur 1 tragen im übrigen gleiche Bezugszeichen) ist dargestellt, daß das Drucksteuerrohr 230 achsparallel zu den Steuerstäben 20, gewissermaßen als Meßlanze, durch das Führungsgerüst 19 und die an dessen Unterseite angeordnete obere Gitterplatte 18 hindurchgeführt ist bis zum Kopf eines Brennelementes 3, wo es in eine entsprechende Aufnahmebohrung 54 mit dem erforderlichen Wärmespiel eingefügt ist. In diesem Bereich wird, wenn der Kühlmittelspiegel (beim sehr unwahrscheinlichen Ausfall der Kühl- und Notkühleinrichtungen des Kernreaktors) bis auf das Niveau der unteren Gitterplatte 18 oder noch tiefer abfällt, eine Übertemperatur durch den Lochrohrkopf 270 sehr schnell festgestellt. Wenn diese den Grenzwert von z.B. ca. 700° C erreicht, schmilzt der Abschmelz-Dichtkörper 50 auf, und die Kugelkörper 53 werden durch den Differenzdruck in das Drucksteuerrohr 230 gestoßen, so daß über die nun freien Druckausgleichsöffnungen 51 sich der Druck bis hin zum Steuerkolben 47 ausgleichen kann. Dieser öffnet das Abblaseventil 44, und der mittelbar gesteuerte Druckausgleich in den Abblasebehälter kann beginnen, der so lange andauert, bis der untere Grenzwert (unterhalb 30 bar) erreicht ist.

## Patentansprüche

1. Sicherheitseinrichtung gegen Überdruckversagen eines Kernreaktor-Druckbehälters (1) bei ungenügender Kernkühlung, wobei ein in das Innere (24) des Druckbehälters (1) ragendes und durch dessen Wand druckdicht hindurchgeführtes Druckrohr (23,230) wenigstens eine im Druckbehälter-Innenraum (24) angeordnete und durch einen Abschmelz-Dichtkörper (25,50) abgedichtete Druckausgleichsöffnung (26,51) aufweist, wobei der Abschmelz-Dichtkörper (25, 50) bei einer Grenztemperatur aufschmilzt und die Druckausgleichsöffnung (26,51) freigibt, während des Normalbetriebs dagegen die Druckausgleichsöffnung (26,51) verschlossen hält, und wobei der Abschmelz-Dichtkörper (25,50) aus einem Schmelzlot besteht, welches Silber enthält und daher strahlungsresistent ist.

2. Sicherheitseinrichtung nach Anspruch 1,
**dadurch gekennzeichnet**, daß das Druckrohr (23, 230) ein Abblaserohr und die Druckausgleichsöffnung (26) eine Druckentlastungsöffnung ist.

3. Sicherheitseinrichtung nach Anspruch 1,
**dadurch gekennzeichnet**, daß das Druckrohr (230) ein Drucksteuerrohr ist, mit dem ein zur Reduzierung des Systemdrucks behälter-extern vorgesehenes Abblaseventil (44) ansteuerbar ist.

4. Sicherheitseinrichtung nach einem der Ansprüche 1 bis 3,
**dadurch gekennzeichnet**, daß das Druckrohr (23) in hängender Anordnung durch einen Deckelstutzen (34) des Druckbehälters (1) dichtend hindurchgeführt ist und mit einem durch den Abschmelz-Dichtkörper (25) abgedichteten Lochrohrkopf (27) in das Innere (24) des Druckbehälters (1) ragt.

5. Sicherheitseinrichtung nach einem der Ansprüche 1 bis 3,
**dadurch gekennzeichnet,** daß das Druckrohr (23) mit einem mittels des Abschmelz-Dichtkörpers (25) abgedichteten Lochrohrkopf (27) unterhalb des Reaktorkerns (2), insbesondere innerhalb eines unteren Kerngerüstes (7), positioniert ist
und daß das Druckrohr (23) im Innenraum (6) der Bodenkalotte (11) abwärts und anschließend im Ringraum (5) zwischen Kernbehälter (16) und Druckbehälter-Wand (22) aufwärts zu einer im Wandbereich zwischen den Hauptkühlmittelstutzen (4, 9) gelegenen druckdichten Durchführung verlegt ist.

6. Sicherheitseinrichtung nach einem der Ansprüche 4 oder 5,
**dadurch gekennzeichnet**, daß der Lochrohrkopf (27) durch einen Rohrstopfen (28) stirnseitig abgeschlossen ist, daß der Lochrohrkopf (27) mehrere einander benachbarte Druckausgleichsöffnungen (26) in seiner Rohrmantelwand (29) aufweist und daß die Druckausgleichsöffnungen (26) durch eine auf die Rohrmantelwand (29) aufgelötete Schmelzhülse (25) abgedichtet sind.

7. Entlastungseinrichtung nach Anspruch 6,
**gekennzeichnet durch** mehrere rohraxial einander benachbarte Kränze (32) von Druckausgleichsöffnungen (26).

8. Sicherheitseinrichtung nach Anspruch 6 oder 7,
**dadurch gekennzeichnet**, daß der Rohrstopfen (28) ein konisches Profil mit abgerundeter Spitze aufweist.

9. Sicherheitseinrichtung nach einem der Ansprüche 1 oder 2, sowie 4 bis 8, **dadurch gekennzeichnet**, daß das Druckrohr (23) außerhalb des Druckbehälters (1) als Abblaseleitung (43) in einen Abblasebehälter mündet.

10. Sicherheitseinrichtung nach einem der Ansprüche 1, sowie 3 bis 8,
**dadurch gekennzeichnet**, daß das als Drucksteuerrohr (230) ausgebildete Druckrohr an seinem in das Innere (24) des Druckbehälters (1) ragenden Ende insbesondere durch einen Deckel (52) abgeschlossen ist und in seiner Mantelwand wenigstens eine Druckausgleichsbohrung (51) aufweist, innerhalb welcher ein Metallkugelkörper (53) in einen Abschmelzdichtkörper (50) eingebettet ist.

11. Sicherheitseinrichtung nach Anspruch 10,
**dadurch gekennzeichnet**, daß die Druckausgleichsbohrung (851) eine Schrägbohrung ist, deren Bohrungsachse (51') schräg nach innen orientiert ist, so daß im Aufschmelzfalle der Kugelkörper (53) in den Innenraum des Drucksteuerrohres (230) fällt.

12. Sicherheitseinrichtung nach einem der vorhergehenden Ansprüche,
**dadurch gekennzeichnet**, daß die Grenztemperatur in einen Bereich von 600 °C bis 700 °C liegt.

13. Sicherheitseinrichtung nach einem der vorhergehenden Ansprüche,
**dadurch gekennzeichnet**, daß das Schmelzlot einen hohen Silberanteil aufweist, welcher insbesondere bei 50 % liegt.

## Claims

1. Safety device against overpressure failure of a nuclear reactor pressure vessel (1) in the event of insufficient core cooling, wherein a pressure pipe (23, 230) projecting into the interior (24) of the pressure vessel (1) and guided through its wall in a pressure-tight manner has at least one pressure compensation opening (26, 51) arranged in the pressure-vessel interior (24) and sealed by a fusible sealing body (25, 50), wherein the fusible sealing body (25, 50) melts open at a limiting temperature and releases the pressure compensation opening (26, 51), but keeps the pressure compensation opening (26, 51) closed during normal operation, and wherein the fusible sealing body (25, 50) consists of a melting solder which contains silver and is therefore radiation-resistant.

2. Safety device according to claim 1, characterized in that the pressure pipe (23, 230) is a blow-off pipe and the pressure compensation opening (26) is a pressure relief opening.

3. Safety device according to claim 1, characterized in that the pressure pipe (230) is a pressure control pipe with which a blow-off valve (44) provided outside the vessel for reducing the system pressure can be controlled.

4. Safety device according to one of claims 1 to 3, characterized in that the pressure pipe (23) in suspended arrangement is guided in a sealing manner through a cover connection piece (34) of the pressure vessel (1) and, with a perforated pipe head (27) sealed by the fusible sealing body (25), projects into the interior (24) of the pressure vessel (1).

5. Safety device according to one of claims 1 to 3, characterized in that the pressure pipe (23) with a perforated pipe head (27) sealed by means of the fusible sealing body (25) is positioned below the reactor core (2), in particular within a lower core structure (7), and in that the pressure pipe (23) in the interior (6) of the bottom hemisphere (11) is displaced downwards and, subsequently in the annular space (5) between the core vessel (16) and the pressure-vessel wall (22), upwards to a pressure-tight penetration which is placed in the wall region between the main coolant connection pieces (4, 9).

6. Safety device according to one of claims 4 or 5, characterized in that the perforated pipe head (27) is sealed on the front side by a pipe plug (28), in that the perforated pipe head (27) has several pressure compensation openings (26) adjacent to each other in its pipe shell wall (29), and in that the pressure compensation openings (26) are sealed by a fusible sleeve (25) soldered on to the pipe shell wall (29).

7. Relief device according to claim 6, characterized by several rings (32) of pressure compensation openings (26) which are adjacent to each other in a pipe-axial manner.

8. Safety device according to claim 6 or 7, characterized in that the pipe plug (28) has a conical profile with a rounded tip.

9. Safety device according to one of claims 1 or 2 and 4 to 8, characterized in that the pressure pipe (23) outside the pressure vessel (1) opens as blow-off line (43) into a blow-off vessel.

10. Safety device according to one of claims 1 and 3 to 8, characterized in that the pressure pipe constructed as pressure control pipe (230) is sealed at its end which projects into the interior (24) of the pressure vessel (1) in particular by a cover (52) and has in its shell wall at least one pressure compensation bore (51), within which a spherical metal body (53) is embedded into a fusible sealing body (50).

11. Safety device according to claim 10, characterized in that the pressure compensation bore (851) is an inclined bore, the bore axis (51') of which is oriented in an inclined manner to the inside, so that in the event of fusion the spherical body (53) falls into the interior of the pressure control pipe (230).

12. Safety device according to one of the preceding claims, characterized in that the limiting temperature lies in the range of 600°C to 700°C.

13. Safety device according to one of the preceding claims, characterized in that the melting solder has a high silver content which lies in particular at 50%.

## Revendications

1. Dispositif de prévention de défaillance due à la mise en surpression d'une cuve sous pression d'un réacteur nucléaire en cas de refroidissement insuffisant du coeur, un tube de pression (23, 230) pénétrant à l'intérieur (24) de la cuve sous pression (1) et traversant la paroi de celle-ci en tenant la pression comportant au moins un orifice de compensation de pression (26, 51) disposé à l'intérieur (24) de la cuve de pression et rendu étanche par un corps d'étanchéité fusible (25, 50), lequel corps d'étanchéité fusible (25, 50) fond à une température limite et dégage l'orifice de compensation de pression (26, 51), mais maintient fermé ledit orifice de compensation de pression (26, 51) pendant le fonctionnement normal, et le corps d'étanchéité fusible (25, 50) étant constitué d'une brasure fusible qui, contenant de l'argent, est radiorésistante.

2. Dispositif de prévention selon la revendication 1, caractérisé en ce que le tube de pression (23, 230) est un tube de purge et l'orifice de compensation de pression (26) un orifice de décharge.

3. Dispositif de prévention selon la revendication 1, caractérisé en ce que le tube de pression (230) est un tube de commande de pression permettant de commander une soupape d'évacuation (44) prévue à l'extérieur de la cuve pour réduire la pression du système.

4. Dispositif de prévention selon l'une des revendications 1 à 3, caractérisé en ce que le tube de pression (23) est suspendu et guidé dans cette disposition de manière étanche à travers une tubulure de couvercle (34) de la cuve sous pression (1) et pénètre avec une tête de tube à trous (27) rendue étanche par le corps d'étanchéité fusible (25) à l'intérieur (24) de la cuve sous pression (1).

5. Dispositif de prévention selon l'une des revendications 1 à 3, caractérisé en ce que le tube de pression (23) pourvu d'une tête de tube à trous (27) rendue étanche par le corps d'étanchéité fusible (25) est positionné au-dessous du coeur (2) du réacteur, en particulier à l'intérieur d'une ossature inférieure (7) du coeur, et en ce qu'à l'intérieur (6) de la calotte de fond (11), le tube de pression (23) est posé vers le bas et ensuite, dans l'espace annulaire (5) entre l'enceinte (16) et la paroi (22) de la cuve de pression, vers le haut en direction d'une traversée étanche à la pression située au niveau de la paroi entre les tubulures primaires de refroidissement (4, 9).

6. Dispositif de prévention selon l'une des revendications 4 ou 5, caractérisé en ce que la tête de tube à trous (27) est obturée sur sa face par un bouchon de tube (28), en ce que la tête de tube à trous (27) comporte dans sa paroi d'enveloppe (29) plusieurs orifices de compensation de pression (26) contigus et en ce que les orifices de compensation de pression (26) sont rendus étanches par une gaine fusible (25) brasée sur la paroi d'enveloppe (29).

7. Dispositif de décharge selon la revendication 6, caractérisé par plusieurs couronnes (32) d'orifices de compensation de pression (26), contiguës les unes aux autres selon l'axe du tube.

8. Dispositif de prévention selon la revendication 6 ou 7, caractérisé en ce que le bouchon de tube (28) présente un profil conique à pointe arrondie.

9. Dispositif de prévention selon l'une des revendications 1 ou 2 et 4 à 8, caractérisé en ce que le tube de pression (23) débouche à l'extérieur de la cuve sous pression (1) sous forme de conduite de purge (43) dans un réservoir de purge.

10. Dispositif de prévention selon l'une des revendications 1 et 3 à 8, caractérisé en ce que le tube de pression réalisé sous forme de tube de commande de pression (230) est obturé à son extrémité s'avançant à l'intérieur (24) de la cuve sous pression (1) par un couvercle (52) et comporte dans sa paroi d'enveloppe au moins un alésage de compensation de pression (51), à l'intérieur duquel une sphère métallique (53) est encastrée dans un corps d'étanchéité fusible (50).

11. Dispositif de prévention selon la revendication 10, caractérisé en ce que l'alésage de compensation de pression (51) est un alésage biais dont l'axe d'alésage (51') est orienté en biais vers l'intérieur, de sorte qu'en cas de fusion la sphère (53) tombe à l'intérieur du tube de commande de pression (230).

12. Dispositif de prévention selon l'une des revendications précédentes, caractérisé en ce que la température limite est comprise entre 600°C et 700°C.

13. Dispositif de prévention selon l'une des revendications précédentes, caractérisé en ce que la brasure fusible contient une concentration d'argent importante, en particulier de l'ordre de 50 %.
